# EUROPÄISCHE PATENTANMELDUNG

(11) **EP 2 020 341 A2**
(43) Veröffentlichungstag der Anmeldung: **04.02.2009**
(21) Anmeldenummer: 08009664.7
(22) Anmeldetag: 28.05.2008
(51) Int. Cl.: B60R 21/015

(54) **Verfahren zum Betrieb eines Kraftfahrzeuges und Steuereinrichtung**

(30) Priorität: 01.08.2007 DE 102007036079
(71) Anmelder: GM Global Technology Operations, Inc., Detroit, MI 48265-3000 (US)
(72) Erfinder: Illium, Justus, 55130 Mainz (DE); Kanning, Torsten, 65346 Eltville/Erbach (DE)
(74) Vertreter: Strauss, Peter

(57) **Zusammenfassung**

Ein Verfahren und eine Steuereinrichtung für ein Fahrzeug sehen vor, dass mittels eines Umgebungsüberwachungssystems (24) die unmittelbare Umgebung des Fahrzeugs (1) ü-berwacht wird, dass eine Kollision mit gegebenenfalls sich öffnenden Fahrzeugtüren (15,16) geprüft wird, dass die Besetzung der entsprechenden Fahrzeugsitze (20,21) zusätzlich geprüft wird und nur in dem Fall, dass ein entsprechender Fahrzeugsitz besetzt ist, die entsprechende Tür durch Warnsignale bzw. Blockieren gesichert wird.

## Beschreibung

Die vorliegende Erfindung liegt auf dem Gebiet der Automobiltechnik, genauer auf dem Gebiet der Sicherheitseinrichtungen für Kraftfahrzeuge.

Grundsätzlich werden mit fortschreitender technischer Entwicklung, immer dichter werdendem Straßenverkehr und somit höherer Beanspruchung beim Führen eines Kraftfahrzeugs immer höhere Anforderungen an die Aufmerksamkeit beim Fahrer und auch bei den übrigen Teilnehmern im Straßenverkehr gefordert.

Um ein Höchstmaß an technischer Unterstützung zur Vermeidung von Unfällen zu bieten, ist eine Anzahl von Sicherheitssystemen für Kraftfahrzeuge bereits bekannt, unter diesen beispielsweise Abstandswarnsysteme, Geschwindigkeitsregelsysteme, Lane departure systeme sowie Einparkassistenten und Kollisionswarnsysteme bzw. entsprechende Steuereinrichtungen, die auch in die Steuerung des Kraftfahrzeugs, beispielsweise durch Bremsung oder Bremsassistenz, eingreifen.

Eine besondere Art von Unfallrisiken betrifft zudem die Kollision mit Gegenständen oder anderen Verkehrsteilnehmern beim Öffnen der Fahrzeugtüren. Dies findet im Wesentlichen bei stehenden oder sehr langsam rollenden Fahrzeugen statt und es ist das Ziel der vorliegenden Erfindung, solche Kollisionen zu verhindern bzw. das Risiko zu minimieren. Dabei liegt eine besondere Schwierigkeit darin, dass das Öffnen der Türen außer durch den Fahrer auch durch die übrigen Insassen vorgenommen werden kann, so dass eine zentrale Steuerung erschwert ist.

Es ist aus dem Stand der Technik bereits eine Vielzahl von Systemen bekannt, die zur Reduzierung von Gefahren im Zusammenhang mit der Öffnung von Fahrzeugtüren dienen.

Beispielsweise ist aus der DE 41 19 579 A1 eine Vorrichtung zum Erfassen von Gegenständen im Umfeld eines Fahrzeugs bekannt, bei der in dem Türfalz einer Fahrzeugtür eine Abstandsmessvorrichtung, beispielsweise auf der Basis von Ultraschall, Infrarot oder Radar, eingebaut ist. Beim Ausschwenken der Fahrzeugtür wird die Vorrichtung aktiviert, beispielsweise mittels eines Türkontaktschalters. Ist die Tür hinreichend weit ausgeschwenkt, so kann beispielsweise ein sich nähernder Fahrradfahrer erfasst werden und es kann eine Türbremse zur Blockierung der Tür aktiviert werden.

Aus der EP 1 375 267 A2 ist ein System bekannt, bei dem eine entsprechende Kollisionsgefahr noch bei geschlossener Fahrzeugtür erkannt werden kann. Es wird beispielsweise eine Trajektorie eines Objekts mittels Sensoren ermittelt und diese mit dem Schwenkbereich einer Fahrzeugtür zur Ermittlung des Kollisionsrisikos abgeglichen.

Als Sensorik wird ein bereits für andere Einrichtungen des Fahrzeugs genutztes Sensorsystem, wie beispielsweise ein Abstandswarnsystem oder ein Einparkhilfesystem, genutzt.

Aus der EP 1265 772 B1 ist ein Überwachungssystem für ein Fahrzeug bekannt, bei dem abhängig von der sensorischen Erfassung der Umgebung eine Fahrzeugtür blockiert oder gebremst wird. Die Wahrnehmung eines Gegenstandes oder einer Person, die eine Kollisionsgefahr darstellen, geschieht mittels Ultraschallsensoren, Mikrowellen, Video, Infrarot-Triangulation oder ähnlicher Verfahren. Bei der Ausgabe eines Warnsignals in optischer oder akustischer Form wird die Fahrsituation, beispielsweise die Geschwindigkeit des Fahrzeugs, berücksichtigt, so dass beispielsweise bei hoher Fahrzeuggeschwindigkeit das System deaktiviert ist. Die Sicherheitsvorrichtung kann durch Betätigung der inneren Türgriffe aktiviert werden.

Aus der DE 10 2005 014 581 A1 ist bekannt, das Fahrzeugumfeld zu überwachen und ein Warnsignal auszugeben, wenn sich ein Hindernis nähert. Die Absicht, eine Tür des Fahrzeugs zu öffnen, wird aus dem Signal eines Näherungssensors geschlossen, der eine Annäherung einer Hand an einen Fahrzeugtürinnengriff vor der Berührung detektiert.

Ein Warnsignal kann dort beispielsweise in haptischer Form durch Vibration des Türgriffs ausgegeben werden. Zudem kann die Tür verriegelt oder abgebremst werden.

Aus der DE 10 2004 049 054 A1 ist eine Unfallwarnvorrichtung für ein Fahrzeug bekannt, bei der durch eine Hinderniswarnvorrichtung Hindernisse im Schwenkbereich einer Fahrzeugtür detektiert werden und eine Warnung beispielsweise auch durch Vibration einer Bedienvorrichtung für eine Tür oder durch eine haptisch wahrnehmbare Änderung der Bediencharakteristik ausgegeben wird.

Grundsätzlich sind damit Systeme zur Verringerung des Risikos beim Öffnen von Fahrzeugtüren bekannt, die sowohl das Fahrzeugumfeld überwachen als auch die Betätigung von Fahrzeugtüren bzw. die entsprechende Absicht detektieren.

Der vorliegenden Erfindung liegt die Aufgabe zugrunde, derartige Systeme dahingehend zu verbessern, dass die Fehler- und Ausfallsicherheit erhöht wird und insbesondere noch sicherer erkannt wird, bei welchen der Fahrzeugtüren eine Kollisionsgefahr droht.

Die Aufgabe wird erfindungsgemäß mit den Merkmalen des Patentanspruchs 1 gelöst.

Der Erfindung liegt dabei der Gedanke zugrunde, dass grundsätzlich die Überwachung von Türen, die neben unbesetzten Fahrzeugsitzen liegen, zur Vermeidung von Fehlalarmen eingespart werden kann. Es ist vielmehr verstärkt darauf zu achten, dass das Kollisionsrisiko bei den Fahrzeugtüren gemindert wird, die unmittelbar neben Fahrzeugsitzen liegen, die von einem Fahrgast besetzt sind. Bei diesen Türen besteht das Risiko, dass der Fahrgast oder der Fahrer diese ohne entsprechende Umsicht öffnet und damit eine Kollision mit stehenden oder sich bewegenden Hindernissen, Fahrzeugen oder Fußgängern droht.

Zu diesem Zweck ist ein Sitzüberwachungssystem vorgesehen, dass ermittelt, welche Sitze des Fahrzeugs besetzt sind, beispielsweise durch eine Überwachung der Gewichtsbelastung mittels Sensoren im Sitz oder eine optische Überwachung, beispielsweise mittels einer Kamera oder eines Lichtschrankensystems oder auch durch eine andere gängige Art von Überwachungssystem, wie beispielsweise Infrarot oder dergleichen. Ist ein Fahrzeugsitz besetzt, so wird an der diesem benachbarten Tür die Sicherheitseinrichtung aktiviert bzw. die Einwirkung der Sicherheitseinrichtung auf diese Tür freigegeben. Die entsprechende Zuordnung von Türen zu den Fahrzeugsitzen kann beispielsweise derart sein, dass der Beifahrersitz der rechten vorderen Tür zugeordnete ist, der rechte hintere Sitz der rechten hinteren Fahrzeugtür, der linke hintere Sitz der linken hinteren Fahrzeugtür und mittlere Sitze auf der Rückbank jeweils beiden hinteren Fahrzeugtüren, da eine dort sitzende Person grundsätzlich beide hinteren Fahrzeugtüren bedienen könnte.

Wird ein entsprechendes Kollisionsrisiko mit einem Gegenstand oder einem anderen Verkehrsteilnehmer detektiert und sitzt ein Fahrgast an der entsprechenden Tür, so werden die Warnsignale ausgegeben, zumindest dann, wenn ein Türöffnungsvorgang eingeleitet ist oder unmittelbar bevorsteht.

Die Erfindung kann vorteilhaft dadurch ausgestaltet werden, dass das Sitzüberwachungssystem nicht nur auf den Sitzen lastende Gewichte überwacht, sondern auch die Gewichtsverteilung erfasst,um beispielsweise einen sitzenden Passagier von einer toten Last, wie beispielsweise einer Einkaufstasche, unterscheiden zu können. Zu diesem Zweck können mehrere Gewichtssensoren in einen Sitz eingebaut sein, um aufgrund der Gewichtsverteilung eine Person von einer Tasche oder einem Kasten unterscheiden zu können.

Zusätzlich können auch Änderungen der Gewichtsverteilung auf einem Sitz überwacht werden, die eher für einen lebenden Passagier als für ein zu transportierendes Gut typisch sind.

Entsprechende Warnsignale können bereits ausgegeben werden, wenn eine Hand eines Fahrgasts oder des Fahrers sich einem entsprechenden Bedienelement zum Öffnen der Tür, wie beispielsweise einem Türhebel oder einer elektrischen Entriegelungstaste, nähert. Dies kann mittels Näherungsschaltern realisiert werden. Es ist grundsätzlich aber auch möglich, die Sicherheitseinrichtung mit der tatsächlichen Betätigung eines Türöffners zu koppeln.

Das erfindungsgemäße Umgebungsüberwachungssystem des Fahrzeugs kann beispielsweise ein gängiges Abstandswarnsystem oder ein Einparkassistent mit entsprechenden Ultraschall-, Lidar- oder Radarsensoren sein, die Abstandsmessungen zum vorderen, hinteren oder seitlichen Bereich des Fahrzeugs durchführen oder auch eine elektronische Kamera, deren Bilder mittels einer Datenverarbeitungseinrichtung auf sich nähernde Gegenstände analysiert werden können. So kann das Kollisionsrisiko summarisch, jedoch auch für jede einzelne Fahrzeugtür bestimmt werden.

Zu diesem Zweck kann auch jeweils eine Trajektorie eines sich dem Fahrzeug nähernden Hindernisses - in Relativbewegung gesehen - also beispielsweise eines sich nähernden Fahrrades oder auch eines sich beim langsamen Einparken nähernden Pollers ermittelt werden. Diese wird mit einem Schwenkbereich jeder zu überwachenden Fahrzeugtür abgeglichen und hieraus das Kollisionsrisiko bestimmt.

Zur Warnung des entsprechenden Fahrzeuginsassen vor einem Öffnen der Tür kann ein optisches und/oder akustisches und/oder haptisches Signal ausgegeben werden, wobei besonders vorteilhaft ein Vibrieren eines Türhebels, einer Türöffnungstaste oder einer entsprechenden Fernsteuerung ist.

Zusätzlich kann die Öffnung der Tür blockiert oder verzögert werden, beispielsweise durch ein Bremsen, das die Öffnung der Tür erschwert oder auch durch eine zeitverzögerte Entriegelung.

Damit wird verhindert, dass trotz Ausgeben eines Warnsignals durch den Fahrzeuginsassen quasi automatisch die Tür geöffnet wird bevor das Warnsignal in das Bewusstsein gedrungen ist.

Die Erfindung bezieht sich außer auf ein Verfahren der oben geschilderten Art auch auf eine Steuereinrichtung für ein Kraftfahrzeug mit einem Umgebungsüberwachungssystem zur Erfassung von Gegenständen in einer Umgebung des Fahrzeugs sowie mit einer Sicherheitseinrichtung, die gegebenenfalls ein Warnsignal abgibt und/oder das Öffnen einer Tür blockiert oder verzögert.

Die Durchführung des Verfahrens zur Unfallvermeidung bzw. Risikominimierung setzt voraus, dass ein Umgebungsüberwachungssystem für ein Fahrzeug mit einer entsprechenden Sicherheitseinrichtung zur Ausgabe eines Warnsignals und zudem mit einem Sitzüberwachungssystem gekoppelt ist, um nur die entsprechend gefährdeten Türen zu überwachen und bei ihrer Öffnung bzw. beim Versuch ihrer Öffnung ein entsprechendes Warnsignal abzugeben bzw. die jeweilige Tür zu blockieren oder abzubremsen.

Im Folgenden wird die Erfindung anhand eines Ausführungsbeispiels in einer Zeichnung gezeigt und anschließend beschrieben.

Dabei zeigt
- Figur 1: eine Übersicht über ein Fahrzeug von oben gesehen in einer Verkehrssituation,
- Figur 2: das Zusammenwirken der verschiedenen Sensor- und Sicherheitseinrichtungen des Fahrzeugs,
- Figur 3: eine schematische Darstellung des Verfahrens,
- Figur4: eine schematische Darstellung der Innenseite einer Fahrzeugtür und
- Figur 5: ein Sensorsystem für einen Fahrzeugsitz.

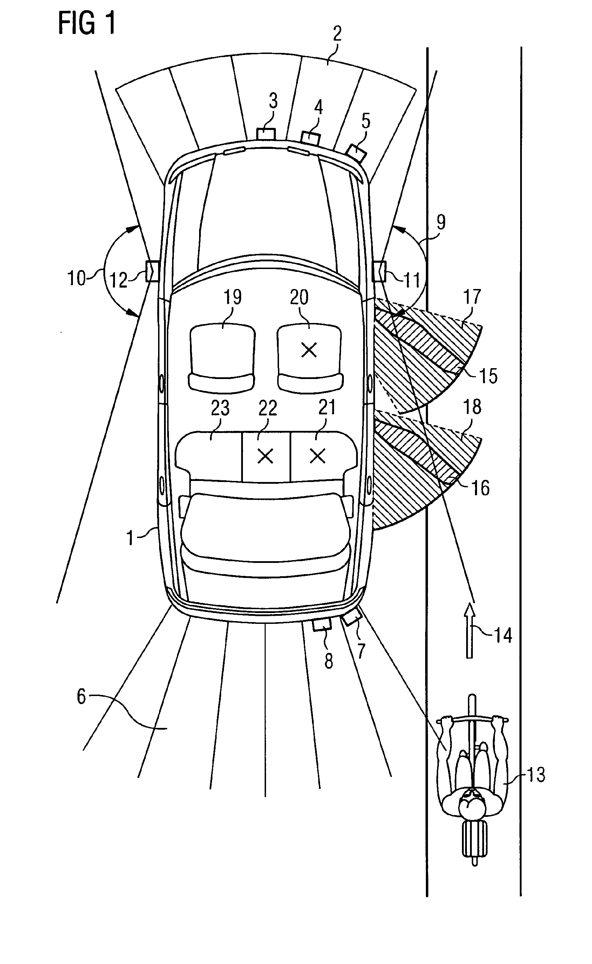

Die Figur 1 zeigt von oben in einer schematischen Ansicht ein Fahrzeug 1 mit einem Umgebungsüberwachungssystem, mit dem in einem vorderen Erfassungsbereich 2 mittels Ultraschallsensoren 3, 4, 5 in einem hinteren Erfassungsbereich 6 mittels Ultraschallsensoren 7, 8 und in seitlichen Erfassungsbereichen 9, 10 rechts und links in Fahrtrichtung gesehen vom Fahrzeug mittels Kameras 11, 12 jeweils selektiv Bereiche aus der Umgebung des Fahrzeugs überwacht werden.

Mittels der genannten Sensoren 3, 4, 5, 7, 8, 11, 12 werden grundsätzlich Abstände zu Hindernissen oder anderen Verkehrsteilnehmern gemessen und Änderungen registriert bzw. Bilder von der Umgebung aufgenommen und diese elektronisch analysiert.

Auf diese Weise können Hindernisse 13, die z. B. durch einen Fahrradfahrer repräsentiert sind, beispielsweise durch den hinteren rechten Ultraschallsensor 7 in der jeweiligen Position erfasst werden. Auch Änderungen der Relativposition zwischen dem Fahrzeug 1 und dem Hindernis 13 im Zug einer Bewegung des Fahrzeugs 1 oder des Hindernisses 13 sind erfassbar. Hieraus kann beispielsweise eine Trajektorie 14 des Hindernisses relativ zum Fahrzeug berechnet werden.

Das Fahrzeug weist vier Fahrzeugtüren auf, von denen die rechten Türen 15, 16 in teilweise geöffneter Position dargestellt und schraffiert hervorgehoben sind.

Es ist jeweils schraffiert auch ein Schwenkbereich 17, 18 der jeweiligen Tür eingezeichnet, in dem beim Öffnen der Tür eine Kollision mit Gegenständen stattfinden kann.

Es kann nun der jeweilige Schwenkbereich 17, 18 mit derzeitigen Position eines Hindernisses 13 bzw. der berechneten Trajoktorie abgeglichen werden, um festzustellen, ob eine Kollision droht.

Außer den Fahrzeugtüren 15, 16 kann beispielsweise ein Heckklappe, die nicht näher in der Zeichnung dargestellt ist, mit überwacht werden, da auch diese in einen Kollisionsbereich geschwenkt werden kann.

Um Fehlalarme zu vermeiden und möglichst nur diejenigen Türen 15, 16 zu überwachen, die gefährdet sind, wird zusätzlich die Besetzung der Fahrzeugsitze 19, 20, 21, 22, 23 überwacht.

Beispielsweise droht, wenn ausschließlich die Sitze 19, 23 besetzt sind, von dem Fahrradfahrer 13 keine Kollisionsgefahr, da das Öffnen der Türen 15, 16 durch die entsprechenden Insassen äußerst unwahrscheinlich ist.

In dem hier dargestellten Fall sind die Sitzplätze 20, 21, 22 besetzt, beispielsweise wenn das Fahrzeug geparkt ist und der Fahrer es kurzzeitig verlassen hat.

Es ist also durchaus damit zu rechnen, dass einer der Insassen, die die Sitze 20, 21 besetzen, eine der Türen 15, 16 öffnet.

Grundsätzlich ist festzustellen, dass das Umgebungsüberwachungssystem wie oben beschrieben bei vielen Fahrzeugen zum Zwecke der Parkassistenz oder einer Parklückenermittlung ohnehin vorhanden ist und lediglich Softwareänderungen und Ergänzungen notwendig sind, um die entsprechende Umgebungsüberwachung für das erfindungsgemäße Verfahren nutzbar zu machen.

Auch ein System zur Überwachung der Sitznutzung ist oft aus Sicherheitsgründen vorhanden, beispielsweise um entsprechende Sicherheitsgurtsystem zu ergänzen und Gurtstraffer zu bedienen.

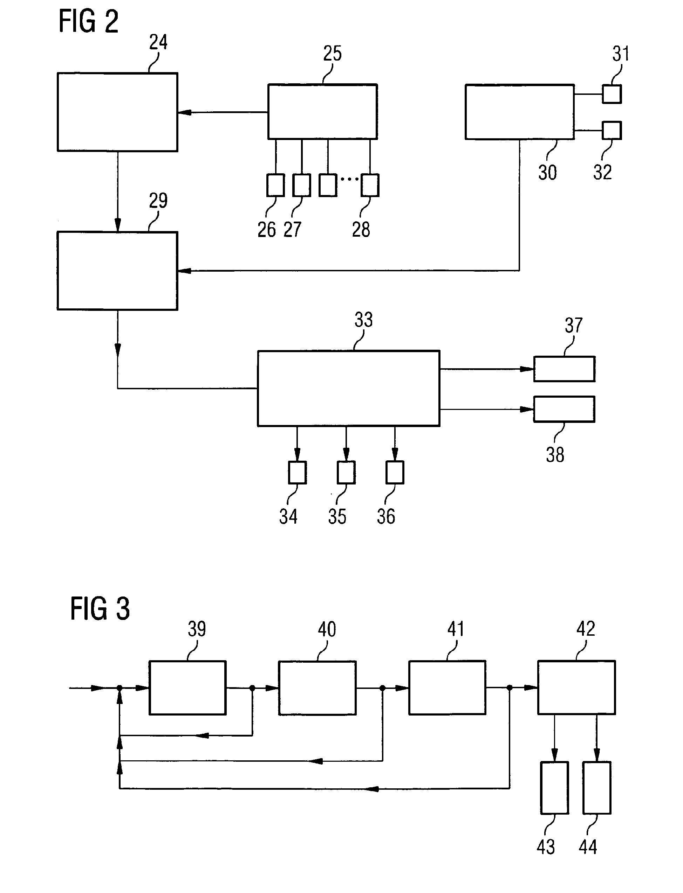

In der Figur 2 ist dargestellt, wie die verschiedenen Systeme des Fahrzeugs zur Durchführung des Verfahrens zusammenwirken. Mit 24 ist das Umgebungsüberwachungssystem bezeichnet, in das die entsprechenden oben genannten Sensoren sowie die Vorverarbeitungseinrichtung integriert sind. Das Umgebungsüberwachungssystem erhält Informationen von dem Sitzüberwachungssystem 25, das mit den Sensoren 26, 27, 28 verbunden ist. Diese können beispielsweise auf der Sitzfläche verteilte Gewichtssensoren sein.

Durch eine Vorverarbeitung kann ermittelt werden, ob ein Gewicht auf dem entsprechenden Sitz lastet und auch, ob dieses Gewicht beispielsweise von einer Einkaufstasche oder von einem Passagier herrührt. Auf diese Weise wird der zentralen Recheneinrichtung 29 mitgeteilt, bei welchen Türen im Falle der Detektion eines Hindernisses eine Kollisionsgefahr besteht, welche Türen mithin einer besonderen Überwachung bedürfen.

Zudem wird mittels einer Öffnungsüberwachungseinrichtung 30, die mit dem Türhebel 31 und/oder einem anderen Bedienelement 32, wie beispielsweise einer Fernbedienung oder einer Öffnungs- oder Entriegelungstaste, verbunden ist, überwacht, ob die Absicht bei einem der Fahrzeuginsassen besteht, eine bestimmte der Fahrzeugtüren zu öffnen. Dies wird der zentralen Recheneinrichtung 29 mitgeteilt, welche die entsprechenden Informationen verknüpft und an eine Sicherheitseinrichtung 33 übermittelt. Diese kann optional Warnsignale mittels einer optischen Einrichtung 34, einer akustischen Einrichtung 35 oder einer haptischen Einrichtung 36, beispielsweise einer Vibrationseinrichtung, ausgeben und gleichzeitig optional auch eine Türblockierungseinrichtung 37 bzw. eine Türverzögerungseinrichtung 38 ansprechen.

Auf diese Weise wird der entsprechende Fahrzeuginsasse einerseits gewarnt, die Tür nicht zu öffnen, andererseits wird ihm das Öffnen der Tür zumindest erschwert, wenn diese nicht vollständig blockiert wird.

In der Figur 3 ist grundsätzlich ein Verfahren gemäß der Erfindung mit den entsprechenden Verfahrensschritten dargestellt. In einem ersten Schritt 39 wird das Umfeld des Fahrzeugs auf Hindernisse überwacht. Dieser Schritt wird wiederholt, bis ein Hindernis detektiert ist.

In einem zweiten Schritt 40 wird die entsprechende Trajektorie berechnet und jeweils mit den Schwenkbereichen der öffenbaren Türen verglichen. Liegt eine Kollisionsmöglichkeit vor, so wird der nächste Schritt 41 eingeleitet, in dem festgestellt wird, ob ein einer Tür, bei der eine Kollisionsgefahr eintritt, benachbarter Sitz besetzt ist. Ist dies nicht der Fall, so wird das Verfahren wieder vom Anfang wiederholt. Ist ein entsprechender Sitz besetzt, so wird in dem nächsten Schritt mittels einer Sicherheitseinrichtung eine Prävention 42 eingeleitet, und zwar parallel oder alternativ durch einen Schritt 43 mit Ausgabe von Warnsignalen und einen Schritt 44 mit einem Blockieren und/oder Verzögern der entsprechenden Fahrzeugtür.

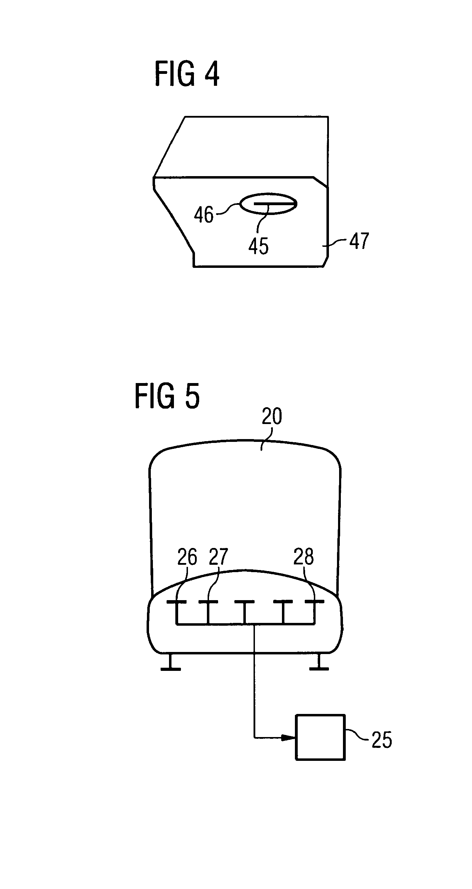

In der Figur 4 ist im Detail eine Fahrzeugtür von innen gezeigt, wobei die Möglichkeit der Ausgabe einer Warnung durch Vibration beim Türgriff 45, bei der Türgriffschale 46 oder der gesamten Innenverkleidung 47 gegeben ist.

In der Figur 5 ist der Vollständigkeit halber im Schnitt ein Fahrzeugsitz 20 dargestellt mit Gewichtssensoren 26, 27, 28, die ein auf dem Sitz lastendes Gewicht detektieren und entsprechende Messsignale an die Vorverarbeitungseinheit 25 leiten. Diese kann grundsätzlich ermitteln, wie das Gewicht verteilt ist und auch eventuelle Veränderungen der Verteilung interpretieren.

Zusammenfassend ist festzustellen, dass sich mittels des erfindungsgemäßen Verfahrens und der entsprechenden Steuereinrichtung das Kollisionsrisiko beim Öffnen der Fahrzeugtüren senken lässt, wobei auch das Risiko von Fehlalarmen weitgehend ausgeschlossen werden kann.

### Bezugszeichenliste

- 1: Kraftfahrzeug
- 2,6,9,10: Erfassungsbereiche
- 3,4,5,7,8: Sensoren
- 11,12: Kameras
- 13: Gegenstand, Fahrradfahrer
- 14: Trajektorie
- 15,16: Fahrzeugtüren
- 17,18: Schwenkbereiche
- 19,20,21,22,23: Sitze
- 24: Umgebungserfassungseinrichtung
- 25: Vorverarbeitungseinrichtung
- 26,27,28: Sitz- Sensoren
- 29: Zentrale Recheneinrichtung
- 30: Öffnungsüberwachungseinrichtung
- 31,45: Türhebel
- 32: Bedienelement
- 33: Sicherheitseinrichtung
- 34,35,36: Warneinrichtungen
- 37: Türblockierungseinrichtung
- 38: Türverzögerungseinrichtung
- 39,40,41,42: Verfahrensschritte
- 43: Warnsignal
- 44: Blockierungsschritt
- 46: Türgriffschale
- 47: Türverkleidung

## Patentansprüche

1. Verfahren zum Betrieb eines Kraftfahrzeuges (1), bei dem durch ein Umgebungsüberwachungssystem (24) ein Erfassungsbereich (2,6,9,10) in der Umgebung des Fahrzeugs mittels Sensoren (3,4,5,7,8,11,12) überwacht wird, wobei bei einem Kollisionsrisiko mit einer wenigstens teilweise geöffneten Fahrzeugtür (15,16) in dem Fall, dass diese geöffnet werden soll durch eine Sicherheitseinrichtung (33) ein Warnsignal abgegeben und/oder das Öffnen der Tür (15,16) blockiert oder verzögert wird, **dadurch gekennzeichnet, dass** durch ein Sitzüberwachungssystem (25,26,27,28) überwacht wird, welche die Sitze (19,20,21,22,23) des Fahrzeugs besetzt und die Abgabe eines Warnsignals und/oder eine Einwirkung der Sicherheitseinrichtung auf eine Kraftfahrzeugtür oder diese zugeordnete Bedienelemente von den durch das Sitzüberwachungssystem (25,26,27,28) ermittelten, der jeweiligen Kraftfahrzeugtür zugeordneten Daten abhängt.

2. Verfahren nach Anspruch 1, **dadurch gekennzeichnet, dass** das Sitzüberwachungssystem (25,26,27,28) das auf den Fahrzeugsitzen (19,20,21,22,23) lastende Gewicht überwacht.

3. Verfahren nach Anspruch 1 oder 2, **dadurch gekennzeichnet, dass** das Sitzüberwachungssystem (25,26,27,28) die auf den Fahrzeugsitzen (19,20,21,22,23) lastende Gewichtsverteilung überwacht.

4. Verfahren nach Anspruch 1, 2 oder 3, **dadurch gekennzeichnet, dass** das Sitzüberwachungssystem (25,26,27,28) die zeitlichen Änderungen von Gewichtsverteilungen auf den Sitzen (19,20,21,22,23) des Fahrzeugs überwacht.

5. Verfahren nach Anspruch 1 oder einem der folgenden, **dadurch gekennzeichnet, dass** das Umgebungsüberwachungssystem (24) die Umgebung mittels Ultraschall, Lidar oder Radar erfasst.

6. Verfahren nach Anspruch 1 oder einem der folgenden, **dadurch gekennzeichnet, dass** das Überwachungssystem (24) die Umgebung mittels einer elektronischen Kamera (11,12) erfasst.

7. Verfahren nach Anspruch 5 oder 6, **dadurch gekennzeichnet, dass** ein Kollisionsrisiko für jede Fahrzeugtür (15,16) besonders bestimmt wird.

8. Verfahren nach Anspruch 5, 6 oder 7, **dadurch gekennzeichnet, dass** für gegebenenfalls erfasste Gegenstände (13) eine Relativbewegungstrajektorie (14) relativ zum Fahrzeug (1) bestimmt wird.

9. Verfahren nach Anspruch 1 oder einem der folgenden, **dadurch gekennzeichnet, dass** durch die Sicherheitseinrichtung ein zum Öffnen der Tür dienendes Bedienelement (45,46) zum Vibrieren gebracht wird.

10. Verfahren nach Anspruch 9, **dadurch gekennzeichnet, dass** das Bedienelement ein Türhebel (45) ist.

11. Verfahren nach Anspruch 9, **dadurch gekennzeichnet, dass** das Bedienelement eine Türöffnungstaste ist.

12. Verfahren nach Anspruch 9, **dadurch gekennzeichnet, dass** das Bedienelement eine Fernsteuerung ist.

13. Verfahren nach Anspruch 1 oder einem der folgenden, **dadurch gekennzeichnet, dass** eine Öffnung der Tür verzögert wird.

14. Verfahren nach Anspruch 1 oder einem der folgenden, **dadurch gekennzeichnet, dass** ein optisches oder akustisches Warnsignal abgegeben wird.

15. Steuereinrichtung für ein Kraftfahrzeug mit einem Umgebungsüberwachungssystem (24) zur Erfassung von Gegenständen (13) in einer Umgebung (2,6,9,10) des Fahrzeugs sowie mit einer Sicherheitseinrichtung (33), die gegebenenfalls ein Warnsignal abgibt und/oder das Öffnen einer Tür (15,16) blockiert oder verzögert, **gekennzeichnet durch,** ein mit der Sicherheitseinrichtung (33) verbundenes Sitzüberwachungssystem (25,26,27,28), dessen Überwachungsergebnisse **durch** die Sicherheitseinrichtung berücksichtigt werden.
